# EUROPÄISCHE PATENTSCHRIFT

(11) **EP 0 725 045 B1**
(45) Veröffentlichungstag und Bekanntmachung des Hinweises auf die Patenterteilung: **21.10.1998**
(21) Anmeldenummer: 96100966.9
(22) Anmeldetag: 24.01.1996
(51) Int. Cl.: C04B 35/111, C09K 3/14, C04B 35/64

(54) **Verfahren zur Herstellung gesinterter alpha-Al2O3-Körper sowie deren Verwendung**
Process for the preparation of sintered alpha-alumina bodies and use thereof
Procédé pour la préparation de corps frittés alpha-alumine et leur utilisation

(30) Priorität: 06.02.1995 DE 19503854
(43) Veröffentlichungstag der Anmeldung: 07.08.1996
(73) Patentinhaber: KORUND LAUFENBURG GmbH, 79725 Laufenburg (DE)
(72) Erfinder: Möltgen, Paul, Dr., D-79725 Laufenburg (DE); Wilhelm, Pirmin, D-79713 Bad Säckingen (DE); Schmoll, Josef, Dr., D-38642 Goslar (DE)
(74) Vertreter: Patentanwälte Westphal, Buchner, Mussgnug Neunert, Göhring

(56) Entgegenhaltungen:
- EP-A- 0 324 513
- EP-A- 0 524 436
- GB-A- 2 099 012
- GB-A- 2 186 588

## Beschreibung

Die vorliegende Erfindung betrifft ein Verfahren zur Herstellung gesinterter, mikrokristalliner Körper auf Basis von α-Al₂O₃ sowie deren Verwendung.

Eine bevorzugte Anwendung von α-Al₂O₃-Sinterkörpern ist deren Einsatz als Schleifmittel. Neben geschmolzenen Korundschleifmitteln sind solche aus gesintertem Material schon seit mehr als 50 Jahren bekannt.

In der US-A-3 909 991 werden polykristalline α-Al₂O₃-Körper beschrieben, deren Kristallitgröße im Submicron-Bereich liegt und deren Dichte über 95 % der theoretischen Dichte beträgt. Die Herstellung erfolgt durch Heißpressen aus einer Mischung aus Ruß und granulierten α-Al₂O₃-Körpern, die nach der US-A-3 079 243 durch Zerkleinern kaltgepreßter α-Al₂O₃-Formkörper gewonnen werden.

In der neueren Zeit wurden ähnliche gesinterte Schleifmittel auf α-Al₂O₃-Basis bekannt, die aufgrund ihrer mikrokristallinen Struktur Vorteile gegenüber den bekannten Korundschleifmitteln aufweisen. So wird in der EP-B-0 152 768 ein Schleifmittel offenbart, das über die Sol-Gel-Technik bei Sintertemperaturen von ca. 1 400°C hergestellt wird. Als Sinterhilfe werden Kristallisationskeime zugesetzt. Ähnliche Verfahren und Stoffe gehen aus der EP-A-0 024 099, DE-A-3 219 607, US-A-4 518 397, US-A-4 574 003, US-A-4 623 364, EP-A-0 168 606, EP-A-0 200 487, EP-A-0 228 856, EP-A-0 209 084 und der EP-A-0 263 810 hervor.

Allen letztgenannten Verfahren ist gemeinsam, daß sie über ein Sol-Gel-Verfahren mit feinstdispersem Aluminiumoxidmonohydrat des Typs Böhmit durchgeführt werden. Die verhaltnismäßig teuren Rohstoffe, die über die Hydrolyse von Aluminium-organischen Verbindungen gewonnen werden, und die energieaufwendige Verfahrenstechnik lassen die Kosten des Sol-Gel-Korundes auf ein Vielfaches der herkömmlichen Korunde ansteigen. Ein weiterer Nachteil dieser Verfahren ist, daß die kolloidalen Lösungen meist mit relativ großen Mengen leicht flüchtiger anorganischer Säuren stabilisiert sind, was verfahrens- und umwelttechnische Probleme mit sich bringt.

In der DE-C-3 604 848 wird ein Verfahren beschrieben, eine Dispersion aus tonerdehaltigen Rohstoffen, kieselsäurehaltigen Verbindungen und weiteren Zusätzen (z.B. Verbindungen der Metalle Co, Ni, Mg, Cr, Zr, Zn, Si oder Ti) zu einem sinterfähigen Schlicker zu vermahlen, aus dem durch stufenweises Trocknen und Sintern bei Temperaturen bis 1 700°C ein Schleifmittel hergestellt werden kann, dessen Korundprimärkristallite einen Durchmesser von weniger als 5 micron haben. Das so erhaltene Produkt hat mit einer Kristallitgröße kleiner 5 micron noch nicht die Feinstruktur eines Stoffes, der über die Sol-Gel-Methode mit entsprechenden Sinteradditiven hergestellt wird.

Darüber hinaus müssen nach den in der DE-C-3 604 848 offenbarten Verfahren kieselsäurehaltige Verbindungen zugegeben werden, die als Sinterhilfe fungieren. Bei der Sinterung entsteht daraus durch Reaktion mit dem Aluminiumoxid Mullit. Es ist bekannt, das durch die Anwesenheit silikatischer Phasen die Leistungsstärke eines Schleifkorns herabgesetzt wird.

Zahlreiche schleiftechnische Untersuchungen an Sinterkorunden in den letzten Jahren haben gezeigt, daß die Schleifleistung umgekehrt proportional zur Größe der Primärkristalle ist. Das heißt, je feiner das Gefüge ist, umso höher ist in der Regel die Schleifleistung.

Die EP-A-0 524 436 offenbart ein Verfahren, wobei statt der teuren Böhmite andere preiswerte Vorstufen des Aluminiumoxids (z.B. Hydrargillit) eingesetzt werden. Durch Vermahlen und anschließende Desagglomeration werden Suspensionen mit einem Feststoffgehalt zwischen 10 und 40 Gew.-% erhalten, die analog zu den Sol-Gel-Verfahren weiterverarbeitet werden können. Auch bei diesem Verfahren muß mit sehr viel Energieaufwand das restliche Wasser entfernt werden. Mit Ausnahme des teuren Rohstoffes weist das in der EP-A-0 524 436 beschriebene Verfahren alle verfahrenstechnischen Nachteile der Sol-Gel-Methode auf.

Im Vergleich zu den Sol-Gel-Verfahren haben jedoch alle bisher bekannten Alternativ-Verfahren zur Herstellung mikrokristalliner Sinterkorunde, die von preiswerten Rohstoffen ausgehen, den Nachteil, daß nach der Sinterung deutlich gröbere Strukturen vorliegen als bei den über die Sol-Gel-Verfahren gewonnenen Produkten. Die Gründe dafür sind offensichtlich. Die Sol-Gel-Verfahren gehen von besonders feinteiligen Ausgangsstoffen aus, die unter Zugabe von Sinterhilfen verfahrensbedingt bei sehr niedrigen Temperaturen dichtgesintert werden können. Dadurch wird das Kristallwachstum unterdrückt. Die Alternativ-Verfahren benötigen grundsätzlich höhere Sintertemperaturen, die zu einem verstärkten Kristallwachstum führen. Darüber hinaus wird durch die bei der Sinterung stattfindenden Phasenumwandlungen zum α-Al₂O₃ ein inhomogenes und unkontrolliertes Kristallwachstum initiiert. Die Leistungsstärke der über die Alternativ-Verfahren gewonnenen Sinterkorunde liegt somit deutlich unter denen der Sol-Gel-Korunde.

In der EP-A-0 402 686 wird ein Verfahren aufgezeigt, mikrokristallinen Korund über die elektrophoretische Abscheidung aus einer α-Al₂O₃-haltigen organischen Suspension zu gewinnen. Es gelingt so, einen relativ dichten Grünkörper zu erhalten, der allerdings - trotz der dichten und homogenen Packung - erst bei Temperaturen von 1.600°C dichtgesintert werden kann, so daß es auch hier wieder zu einem verstärkten Kristallwachstum kommt. Das Gefüge eines über die elektrophoretische Abscheidung gewonnenen Sinterkorundes ist deutlich gröber als das der über das Sol-Gel-Verfahren hergestellten Sinterkorunde. Entsprechend geringer ist auch die Leistungsstärke der über die Elektrophorese gewonnenen Sinterkorunde.

Aus der GB-A-2 186 588 geht ein Verfahren zur Herstellung gesinterter mikrokristalliner Körper auf Basis von α-Al₂O₃ hervor, bei dem ausgehend von kalziniertem Aluminiumoxid ein Schlicker mit einer Partikelgröße von <1 µm durch Mahlen/Desagglomerieren erhalten wird. Dieser Schlicker wird getrocknet und zu einem Grünkörper verpreßt. Die Grünkörper werden bei 1 300°C und dann bei 1 500°C gesintert. Um das Kristallwachstum während des Sintervorganges in Grenzen zu halten, ist jedoch der Zusatz des Kristallwachstums-Inhibitors SiO₂ notwendig, wodurch jedoch die Verdichtung des Produktes behindert wird. So werden gemäß Beispiel 1 lediglich Dichtewerte von 93 % der theoretischen Dichte erreicht, was sich nachteilig auf die Leistungsfähigkeit des Schleifkorns auswirkt.

Aufgabe dieser Erfindung ist es somit, ein Verfahren zur Herstellung eines mikrokristallinen α-Al₂O₃-Sinterkörpers aufzuzeigen, welches die beschriebenen Nachteile des Standes der Technik nicht aufweist.

Überraschend wurde gefunden, daß diese Anforderungen erfüllt werden durch ein Verfahren zur Herstellung gesinterter, mikrokristalliner Körper auf Basis von α-Al₂O₃, dadurch gekennzeichnet, daß als Ausgangsstoff ein α-Al₂O₃-Pulver mit einer mittleren Korngröße ≤ 3 µm zu einem Schlicker einer Partikelgröße < 1 µm vermahlen oder desagglomeriert wird, der Schlicker auf eine Restfeuchte von ≤ 6 Gew.-% getrocknet wird, das getrocknete Pulver zu einem Grünkörper mit einer Dichte von ≥ 60 % der theoretischen Dichte verpresst und anschließend einer Schocksinterung bei Temperaturen im Bereich von 1 300 bis 1 550°C unterzogen wird, dadurch gekennzeichnet, daß die Teilchen im Schlicker eine bimodale Verteilungskurve aufweisen, wobei das erste Maximum im Bereich zwischen 0,1 und 0,3 µm und das zweite Maximum im Bereich zwischen 0,2 und 1,0 µm liegt, der Grunkörper auf eine Dichte von ≥ 70 % der theoretischen Dichte verpreßt und in ≤ 60 Sekunden, bevorzugt in ≤ 30 Sekunden, besonders bevorzugt in ≤ 10 Sekunden, auf die erforderliche Sintertemperatur gebracht wird.

Der erste Verfahrensschritt besteht aus einer Naßvermahlung oder einer Desagglomerierung eines bereits möglichst feinteiligen α-Al₂O₃-Pulvers. Ziel der Naßvermahlung oder Desagglomerierung ist es, eine noch feinere, sehr homogene α-Al₂O₃-Suspension mit einer extrem engen Kornverteilungskurve zu erhalten. Die Naßvermahlung oder Desagglomerierung wird vorteilhaft im wäßrigen Medium durchgeführt. Im zweiten Schritt wird anschließend die bei der Mahlung oder Desagglomerierung erhaltene wäßrige Suspension getrocknet. Zur Trocknung eignen sich alle in der Technik bekannten Trocknungsverfahren. Vorzugsweise kann ein Sprühtrockner eingesetzt werden. Das Verpressen der erhaltenen Pulver erfolgt vorteilhaft in Kompaktoren. Dabei werden zwei gegenläufige Walzen eingesetzt, wobei das Pulver im Walzenspalt bei hohen Drücken verpreßt wird.

Die Pulverzuführung zum Kompaktor erfolgt dabei bevorzugt über eine Verdichterschnecke. Im vierten Schritt werden die Grünkörper einer Schocksinterung unterzogen. Die Aufbereitung und Klassierung zur fertigen Schleifkörnung erfolgt nach den üblichen Methoden.

Nach dem erfindungsgemäßen Verfahren können überraschenderweise, ausgehend von kostengünstigen Rohstoffen, Sinterkorunde gewonnen werden, die in ihren Eigenschaften vergleichbar mit den Sol-Gel-Korunden sind. Da die Kristallitgröße im gesinterten Endprodukt wesentlich von der mittleren Korngröße und der Kornverteilung im Ausgangsmaterial abhängt, ist es zweckmäßig, möglichst feinteilige α-Al₂O₃-Typen einzusetzen, die dann auf die gewünschte Korngröße vermahlen bzw. desagglomeriert werden.

Bevorzugt werden die Feststoffe auf eine mittlere Teilchengröße von kleiner als 1 µm, besonders bevorzugt kleiner als 0,4 µm, herabgemahlen und/oder desagglomeriert, um die gewünschte Ausgangskorngröße zu erhalten bzw. vorliegende Agglomerate in Einzelkristallite zu zerteilen. Die Vermahlung bzw. Desagglomeration wird vorzugsweise naß in Vibrationsmühlen, Attritoren oder Kugelmühlen durchgeführt. Die Mahldauer hängt von der Ausgangskorngröße und dem eingesetzten Mühlentyp ab. Obwohl es naheliegend sein sollte, ein möglichst feinteiliges Ausgangsmaterial zu wählen, sprechen vielfach wirtschaftliche Überlegungen dagegen; denn die superfeinen α-Aluminiumoxide sind häufig so teuer, daß einer der wesentlichen Vorteile des erfindungsgemäßen Verfahrens, nämlich der Einsatz eines kostengünstigen Rohstoffes, verloren geht. Beim erfindungsgemäßen Verfahren können hingegen vorteilhaft auch gröbere α-Al₂O₃-Ausgangspulver eingesetzt werden.

Da die Schleifleistung sich umgekehrt proportional zur Primärkristallgröße im Schleifkorn verhält, kann es vorteilhaft sein, das Ausgangsmaterial mit zusätzlichen Komponenten, Sinterhilfen und/oder Kristallwachstumsinhibitoren zu versetzen. Geeignete zusätzliche Komponenten, Sinterhilfen und Kristallwachstumsinhibitoren sind die Oxide der Elemente Mg, Co, Ni, Zn, Hf, Ti, Ce, Zr, Cu, Li, Sr, Ba, K, Nb, Si, B und/oder Seltene Erden.

Die Flüssigkeitsmenge bei der Vermahlung wird vorzugsweise so gewählt, daß die entstehende Suspension einen Feststoffgehalt von 15 bis 80 Gew.-%, bevorzugt 30 bis 70 Gew.-%, aufweist. Als Lösungsmittel wird vorzugsweise Wasser eingesetzt. Gegen andere Lösungsmittel wie z.B. Alkohole, Aceton, die ebenfalls eingesetzt werden können, sprechen vor allem ökologische Überlegungen.

Da besonders bevorzugt ein Sinterkörper mit einer mittleren Primärkristallgröße unter 0,4 micron angestrebt wird und bei richtiger Wahl der Sintertemperatur im Falle des erfindungsgemäßen Verfahrens das Kristallwachstum unterdrückt werden kann, reicht es häufig aus, die Mahlung solange fortzusetzen, bis die mittlere Korngröße in der Suspension unter 0,4 micron liegt.

Die Korngrößenverteilung wird mit Hilfe einer Laser-Dispersion-Methode (Microtrac Type MIC 2, Micromeritics) in einer wäßrigen Lösung und Na₄P₂O₇ als Dispergierhilfe gemessen.

Zur Trocknung der Suspension können die üblichen Trocknungsverfahren eingesetzt werden. Besonders vorteilhaft lassen sich Sprühtrocknungsverfahren in einen kontinuierlichen Herstellprozeß integrieren. Die maximale Restfeuchte im getrockneten Produkt sollte 6 Gew.-% nicht überschreiten, da sich Pulver mit höheren Feuchtigkeitsgehalten nur unter Schwierigkeiten weiterverarbeiten lassen. Besonders vorteilhaft weist der Schlicker eine Restfeuchte von < 1 Gew.-% auf. Als besonders vorteilhaft für die Weiterverarbeitung erwiesen sich α-Al₂O₃-Pulver mit einer Restfeuchte zwischen 0,2 und 3,0 Gew.-%.

Die Verdichtung des Pulvers kann über alle in der Keramik bekannten Formgebungsverfahren erfolgen. Als Beispiel können, ohne daß darin eine Einschränkung zu sehen ist, Schlickerguß, kaltisostatisches Pressen, Heißpressen, heißisostatisches Pressen, Zentrifugalabscheidung und uniaxiales Verpressen genannt werden. Bevorzugt wird dabei der Grünkörper auf eine Dichte von ≥ 80 % der theoretischen Dichte verpresst. Als besonders vorteilhaft hat sich das Brikettieren mit Hilfe eines Kompaktors gezeigt. Durch geeignete Wahl der Kompaktierwalzen gelingt es, die Form und Größe der entstehenden Pellets schon weitgehend ihrem späteren Verwendungszweck als Schleifmittel anzupassen. So kann auf ein Nachzerkleinern auf die gewünschte Korngröße nach der Sinterung weitgehend verzichtet werden. Dies bringt neben der offensichtlichen Energieeinsparung für eine Zerkleinerung einen weiteren enormen wirtschaftlichen Vorteil mit sich; denn durch diese Maßnahme gelingt es, gezielt Korngrößen in einer gewünschten Bandbreite zu erhalten, ohne daß dabei, wie bei einer Aufbereitung sonst üblich, ein beträchtlicher Anteil an unerwünschtem Unterkorn anfällt. Da die hochwertigen Sinterkorunde überwiegend im Grobkornbereich eingesetzt werden, ist dies neben der Qualität und den Herstellkosten ein besonders wichtiger Aspekt für ihren wirtschaftlichen Erfolg. Ein konventionelles Aufbereitungsverfahren (Mahlen und Sieben) mit den üblichen Anteilen an Feinkorn kann die Wirtschaftlichkeit des gesamten Prozesses in Frage stellen.

Die Sinterung der Grünkörper erfolgt bei Temperaturen zwischen 1 300°C und 1 550°C. Damit liegt die notwendige Sintertemperatur zwar deutlich unter den sonst für das Sintern von konventioneller α-Al₂O₃-Keramik üblichen Temperaturen von ca. 1 600°C, ist aber gleichzeitig immer noch wesentlich höher, als die beim Sol-Gel-Prozeß erforderliche Temperatur, die vorzugsweise unter 1 300°C liegt. Um so überraschender ist es, daß es bei dem erfindungsgemäßen Verfahren gelingt, das Kristallwachstum nahezu vollständig zu unterdrücken. Dazu muß neben der Feinteiligkeit und sehr engen Kornverteilung des Ausgangspulvers und der hohen Dichte des Grünkörpers als weitere Voraussetzung ein sehr schnelles Erreichen der notwendigen Sintertemperatur gewährleistet sein. Das heißt, daß der Grünkörper möglichst schnell in die heißeste Zone des Sinterofens gelangen sollte. Durch diese Schocksinterung gelingt es, den Sinterprozess abzuschließen, bevor das Kristallwachstum einsetzt. Gleichzeitig wird der Sinterprozess durch die gute Vorverdichtung beschleunigt. Die homogene Kornverteilung und die Feinheit des Ausgangsstoffes begünstigt ein gleichmäßiges Dichtsintern, wobei ein Zusammenwachsen der Primärkristalle zu größeren Kristalliten vermieden werden kann.

Für die Sinterung eignen sich sämtliche Ofentypen bzw. Sinterverfahren, die ein schlagartiges Aufheizen des Grünkörpers ermöglichen. Vorteilhaft können direkt oder indirekt beheizte Drehrohröfen, Pendelöfen, Durchschuböfen, Wirbelschichtsinteröfen oder Mikrowellensinteröfen eingesetzt werden. Die Haltezeit bei der Sinterung beträgt ≤ 60 Minuten, bevorzugt ≤ 30 Minuten, besonders bevorzugt ≤ 15 Minuten.

Nach der Sinterung liegt das Schleifkorn in der gewünschten Korngröße vor und kann durch einfaches Aussieben zur fertigen Schleifkörnung aufklassiert werden. Je nach Einsatzzweck kann es vorteilhaft sein, daß nach der Sinterung ein zusätzlicher Zerkleinerungsschritt durchgeführt wird, um scharfe Schneidkanten zu erhalten. Diese Nacharbeitung kann jedoch unter relativ milden Bedingungen ganz gezielt durchgeführt werden, so daß der vorher erwähnte wirtschaftliche Vorteil des Verfahrens durch die gezielte Herstellung von Grunkörpern, die das gewünschte Kornspektrum abdecken sollen, erhalten bleibt.

Gegenüber der Elektrophorese hat das erfindungsgemäße Verfahren den Vorteil, daß bei vergleichbaren Korngrößen der Ausgangsstoffe feinere Kristallitgefüge im gesinterten Endprodukt erhalten werden können.

Da die Feinheit des Kristallitgefüges in direkter Relation zur Leistungsstärke des Schleifkorns steht, kann nach dem erfindungsgemäßen Verfahren ein Schleifkorn mit einer höheren Abtragsleistung zur Verfügung gestellt werden. Ein weiterer Vorteil aus ökologischer Sicht besteht darin, daß in wäßrigem Medium gearbeitet werden kann und eine Umweltbelastung durch organische Lösungsmittel vermieden wird.

Gegenüber den Sol-Gel-Verfahren ergeben sich ebenfalls - neben dem ökonomischen Vorteil durch den Einsatz von preiswerten Rohstoffen - nicht zu unterschätzende ökologische Vorteile. So werden beim Sol-Gel-Verfahren zur Stabilisierung der Suspension relativ große Mengen an leicht flüchtigen Säuren eingesetzt, die während des Trocknens und vor allem während des Kalzinierens verdampft werden müssen. Bei den Säuren handelt es sich vorzugsweise um Salpeter- oder Salzsäure.

Dabei treten Umweltbelastungen auf, die trotz aufwendiger Technik noch nicht vollständig vermieden werden können. Ein weiterer Vorteil gegenüber den Sol-Gel-Verfahren besteht in der Einfachheit des erfindungsgemäßen Verfahrens, wodurch die Fertigung im kontinuierlichen Produktionsbetrieb erleichtert wird, was letztendlich wieder wirtschaftliche Vorteile mit sich bringt.

Nach dem erfindungsgemäßen Verfahren gelingt die Herstellung von hochdichten gesinterten, mikrokristallinen Körpern mit einer hohen Härte, deren Kristallitgröße zwischen 0,1 und 10 µm einstellbar ist. Aufgrund dieser Eigenschaften eignen sich diese Sinterkörper hervorragend als Schleifmittel, wobei hier die Kristallitgrößen zwischen 0,1 bis 3 µm betragen.

Die erfindungsgemäß hergestellten gesinterten mikrokristallinen Körper eignen sich als Schleifmittel und für die Herstellung von Schleif- und Schneidwerkzeugen.

Da die Schleifeigenschaften wesentlich von der Kristallitstruktur des jeweiligen Schleifkorns abhängen, gelingt es nach dem erfindungsgemäßen Verfahren für die verschiedensten Anwendungszwecke Schleifkörnungen mit einem für die jeweilige Anwendung optimalen Kristallitgefüge bereitzustellen.

Im folgenden wird die Erfindung beispielhaft erläutert, ohne daß darin eine Einschränkung zu sehen ist.

### Beispiele

### Beispiel 1

α-Aluminiumoxid mit einer mittleren Korngröße (d50) von 1,5 µm wurde in einer Rührwerkskugelmühle (Typ PMC 25 TEX, Fa. Drais) auf eine mittlere Korngröße (d50) von 280 nm in wäßrigem Medium naßvermahlen. Die entstehende Slurry mit einem Feststoffgehalt von 30 Gew.-% und einem d90 von 580 nm wurde in einem Sprühtrockner auf eine Restfeuchte von 0,5 Gew.-% getrocknet. Das erhaltene Pulver wurde anschließend in einem Kompaktor unter einem Druck von 2.700 MPa brikettiert. Die dabei entstehenden Grünkörper mit einer Dichte von 73 % TD wurden bei 1 455°C im Drehrohrofen gesintert. Die Haltezeit für die Sinterung betrug 30 Minuten.

Das erhaltene Produkt hatte eine Vickers-Härte (HV 0,2) von 21,2 GPa und eine mittlere Kristallitgröße von 0,33 µm.

### Beispiel 2

α-Al₂O₃ mit einer mittleren Korngröße (d50) von 250 nm wurde entsprechend Beispiel 1 in der Rührwerkskugelmühle so weit desagglomeriert bzw. vermahlen, bis der Feststoffanteil der entstehenden Slurry eine mittlere Korngröße (d50) von 220 nm aufwies. Die Slurry mit einem Feststoffanteil von 38 Gew.-% und einem d90 von 460 nm wurde in einem Umlufttrockenschrank bei 80°C getrocknet. Das getrocknete Pulver wurde in einer Mühle leicht desagglomeriert und in einem Kompaktor brikettiert. Der erhaltene Grünkörper mit einer Dichte von 78 % TD wurde bei 1 455°C im Drehrohrofen gesintert. Die Haltezeit für die Sinterung betrug 30 Minuten.

Das erhaltene Produkt hatte eine Vickers-Härte (HV 0,2) von 22,4 GPa und eine mittlere Primärkristallitgröße von 0,22 µm.

### Beispiel 3

Ein γ-Aluminiumoxid mit einer mittleren Korngröße (d50) von 30 µm wurde in einem Drehrohrofen bei 1 100°C kalziniert und nahezu vollständig in die α-Form überführt. Das so entstehende Produkt wurde in einer Gegenstrahlmühle auf eine mittlere Korngröße von 1,6 µm vermahlen. Anschließend wurde das α-Al₂O₃ in einer Rührwerkskugelmühle auf eine mittlere Teilchengröße (d50) von 360 nm naßvermahlen. Die Slurry mit einem Feststoffanteil von 28 Gew.-% und einem d90 von 610 nm wurde in einem Sprühtrockner auf eine Restfeuchte von 0,5 Gew.-% getrocknet. Das getrockuete Pulver wurde in einem Kompaktor brikettiert. Der erhaltene Grünkörper mit einer Dichte von 75 % TD wurde in einem Drehrohrofen bei 1 455°C gesintert. Die Haltezeit für die Sinterung betrug 30 Minuten.

Das erhaltene Produkt hatte eine Vickers-Härte (HV 0,2) von 21,0 GPa und eine mittlere Kristallitgröße von 0,4 µm.

Im folgenden werden Schleiftests mit den erfindungsgemäß hergestellten Schleifkörnern im Vergleich zu Schleifkörnern des Standes der Technik beschrieben.

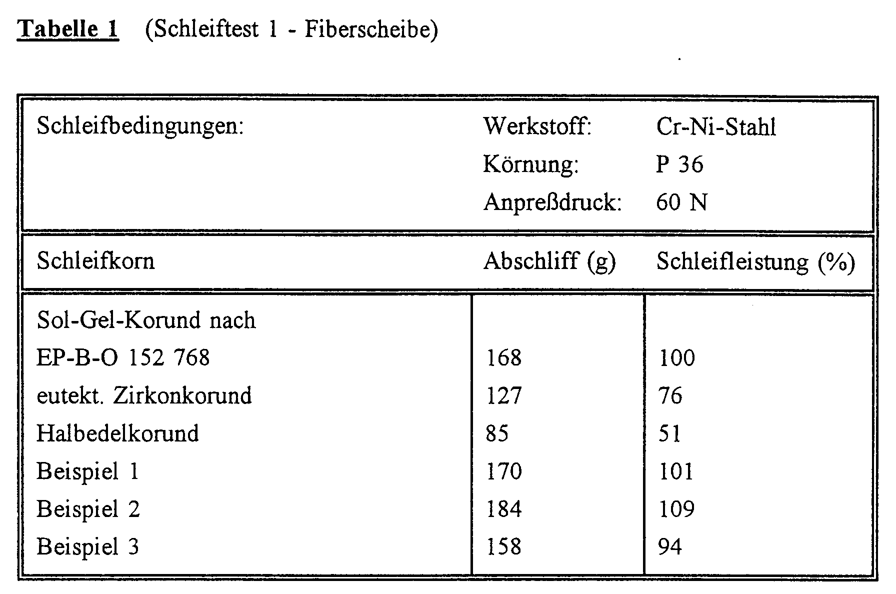

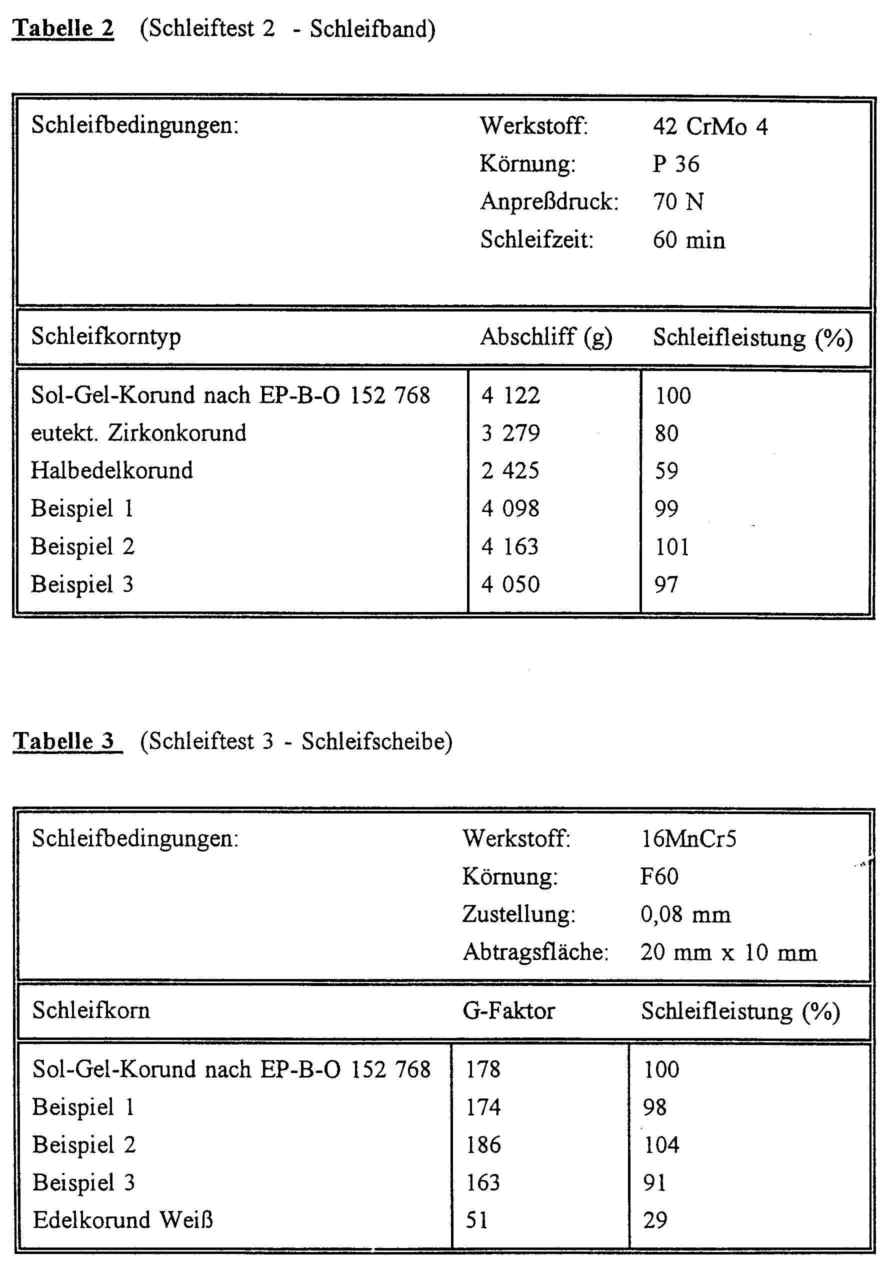

## Patentansprüche

1. Verfahren zur Herstellung gesinterter, mikrokristalliner Körper auf Basis von α-Al₂O₃, in dem als Ausgangsstoff ein α-Al₂O₃-Pulver mit einer mittleren Korngröße ≤ 3 µm zu einem Schlicker einer Partikelgröße < 1 µm vermahlen oder desagglomeriert wird, der Schlicker auf eine Restfeuchte von ≤ 6 Gew.-% getrocknet wird, das getrocknete Pulver zu einem Grünkörper mit einer Dichte von ≥ 60 % der theoretischen Dichte verpresst und anschließend einer Schocksinterung bei Temperaturen im Bereich von 1 300 bis 1 550°C unterzogen wird, dadurch gekennzeichnet, daß die Teilchen im Schlicker eine bimodale Verteilungskurve aufweisen, wobei das erste Maximum im Bereich zwischen 0,1 und 0,3 µm und das zweite Maximum im Bereich zwischen 0,2 und 1,0 µm liegt, der Grünkörper auf eine Dichte von ≥ 70 % der theoretischen Dichte verpreßt und in ≤ 60 Sekunden, bevorzugt in ≤ 30 Sekunden, besonders bevorzugt in ≤ 10 Sekunden, auf die erforderliche Sintertemperatur gebracht wird.

2. Verfahren gemäß Anspruch 1, dadurch gekennzeichnet, daß das Ausgangspulver weitere Komponenten, Sinteradditive und/oder Kristallwachstumsinhibitoren, bevorzugt Oxide aus der Gruppe der Elemente Mg, Zn, Ni, Co, Hf, Zr, Si, Ti, Cu, Sr, Ba, K, Nb, B und/oder Seltene Erden, enthält.

3. Verfahren gemäß einem oder mehreren der Ansprüche 1 und 2, dadurch gekennzeichnet, daß der Schlicker eine mittlere Teilchengröße ≤ 0,4 µm aufweist.

4. Verfahren gemäß einem oder mehreren der Ansprüche 1 bis 3, dadurch gekennzeichnet, daß die bimodale Verteilungskurve das erste Maximum im Bereich zwischen 0,1 und 0,2 µm und das zweite Maximum im Bereich zwischen 0,3 und 0,7 µm aufweist.

5. Verfahren gemäß einem oder mehreren der Ansprüche 1 bis 4, dadurch gekennzeichnet, daß 20 bis 70 Gew.-%, bevorzugt 30 bis 50 Gew.-%, des Feststoffgehaltes des Schlickers eine Teilchengröße zwischen 0,1 und 0,3 µm aufweisen und 80 bis 30 Gew.-%, bevorzugt 70 bis 50 Gew.-%, des Feststoffgehaltes des Schlickers eine Teilchengröße zwischen 0,3 und 1,0 µm aufweist.

6. Verfahren gemäß einem oder mehreren der Ansprüche 1 bis 5, dadurch gekennzeichnet, daß der Schlicker einen Feststoffgehalt, gerechnet als α-Al₂O₃, von 15 bis 80 Gew.-%, vorzugsweise 30 bis 70 Gew.-%, aufweist.

7. Verfahren gemäß einem oder mehreren der Ansprüche 1 bis 6, dadurch gekennzeichnet, daß der Schlicker auf eine Restfeuchte < 1 Gew.-% getrocknet wird.

8. Verfahren gemäß einem oder mehreren der Ansprüche 1 bis 7, dadurch gekennzeichnet, daß der Grünkörper auf eine Dichte von ≥ 80 % der theoretischen Dichte, verpreßt wird.

9. Verfahren gemäß einem oder mehreren der Ansprüche 1 bis 8, dadurch gekennzeichnet, daß die Grünkörper vor dem Sintern auf die gewünsche Korngröße zerkleinert und ausgesiebt werden.

10. Verfahren gemäß einem oder mehreren der Ansprüche 1 bis 9, dadurch gekennzeichnet, daß eine Haltezeit bei der Sinterung von ≤ 60 Minuten, besonders bevorzugt ≤ 15 Minuten, eingestellt wird.

## Claims

1. Process for the production of sintered, microcrystalline articles based on α-Al₂O₃ in which an α-Al₂O₃ powder having an average grain size of ≤ 3 µm as the starting material is ground or deagglomerated to yield a slip of a particle size of < 1 µm, the slip is dried to a residual moisture content of ≤ 6 wt.%, the dried powder is compacted to yield a green preform having a density of ≥ 60% of the theoretical density and is then subjected to shock sintering at temperatures in the range from 1300 to 1550°C, characterised in that the particles in the slip have a bimodal distribution curve, wherein the first maximum is in the range between 0.1 and 0.3 µm and the second maximum in the range between 0.2 and 1.0 µm, the green preform is compacted to a density of ≥ 70 % of the theoretical density and is adjusted to the required sintering temperature in ≤ 60 seconds, preferably in ≤ 30 seconds, particularly preferably in ≤ 10 seconds.

2. Process according to claim 1, characterised in that the starting powder contains further components, sintering additives and/or crystal growth inhibitors, preferably oxides from the group of elements comprising Mg, Zn, Ni, Co, Hf, Zr, Si, Ti, Cu, Sr, Ba, K, Nb, B and/or rare earths.

3. Process according to one or more of claims 1 and 2, characterised in that the slip has an average particle size of ≤ 0.4 µm.

4. Process according to one or more of claims 1 to 3, characterised in that the bimodal distribution curve has the first maximum in the range between 0.1 and 0.2 µm and the second maximum in the range between 0.3 and 0.7 µm.

5. Process according to one or more of claims 1 to 4, characterised in that 20 to 70 wt.%, preferably 30 to 50 wt.% of the solids content of the slip have a particle size of between 0.1 and 0.3 µm and 80 to 30 wt.%, preferably 70 to 50 wt.%, of the solids content of the slip have a particle size of between 0.3 and 1.0 µm.

6. Process according to one or more of claims 1 to 5, characterised in that the slip has a solids content, calculated as α-Al₂O₃, of 15 to 80 wt.%, preferably of 30 to 70 wt.%.

7. Process according to one or more of claims 1 to 6, characterised in that the slip is dried to a residual moisture content of < 1 wt.%.

8. Process according to one or more of claims 1 to 7, characterised in that the green preform is compacted to a density of ≥ 80% of the theoretical density.

9. Process according to one or more of claims 1 to 8, characterised in that the green preforms are comminuted and screened to the desired grain size before sintering.

10. Process according to one or more of claims 1 to 9, characterised in that a residence time of ≤ 60 minutes, particularly preferably of ≤ 15 minutes, is set for the sintering.

## Revendications

1. Procédé pour la préparation de corps frittés microcristallins à base de α-Al₂O₃, dans lequel on broie ou on désagglomère en tant que substance de base une poudre en α-Al₂O₃ avec une taille de grain moyenne ≤ 3 µm pour former une barbotine avec une taille de particules < 1 µm, on fait sécher la barbotine jusqu'à une humidité résiduelle ≤ 6 % en poids, on comprime la poudre séchée pour former un corps cru avec une densité ≥ 60 % de la densité théorique et ensuite on le soumet à un frittage par choc à des températures dans la plage comprise entre 1300 et 1550°C, caractérisé en ce que les particules dans la barbotine présentent une courbe de distribution bimodale, dans laquelle le premier maximum est dans la plage comprise entre 0,1 et 0,3 µm et le second maximum dans la plage comprise entre 0,2 et 1,0 µm, en ce que le corps cru est comprimé à une densité ≥ 70 % de la densité théorique et en ce que le corps cru est amené à la température de frittage nécessaire en ≤ 60 secondes, de préférence en ≤ 30 secondes, en particulier en ≤ 10 secondes.

2. Procédé selon la revendication 1, caractérisé en ce que la poudre de départ contient d'autres composants, des additifs de frittage et/ou des inhibiteurs de croissance cristalline, de préférence des oxydes parmi le groupe des éléments Mg, Zn, Ni, Co, Hf, Zr, Si, Ti, Cu, Sr, Ba, K, Nb, B et/ou des terres rues.

3. Procédé selon l'une ou l'autre des revendications 1 et 2, caractérisé en ce que la barbotine présente une taille de particules moyenne ≤ 0,4 µm.

4. Procédé selon l'une ou plusieurs des revendications 1 à 3, caractérisé en ce que la courbe de distribution bimodale présente le premier maximum dans la plage comprise entre 0,1 et 0,2 µm et le second maximum dans la plage comprise entre 0,3 et 0,7 µm.

5. Procédé selon l'une ou plusieurs des revendications 1 à 4, caractérisé en ce que 20 à 70 % en poids, de préférence 30 à 50 % en poids, de la teneur en solides de la barbotine présentent une taille de particules entre 0,1 et 0,3 mm, et en ce que 80 à 30 % en poids, de préférence 70 à 50 % en poids de la teneur en solides de la barbotine présentent une taille de particules entre 0,3 et 1,0 µm.

6. Procédé selon l'une ou plusieurs des revendications 1 à 5, caractérisé en ce que la barbotine présente une teneur en solides, calculée en tant que α-Al₂O₃, de 15 à 80 % en poids, de préférence de 30 à 70 % en poids.

7. Procédé selon l'une ou plusieurs des revendications 1 à 6, caractérisé en ce que l'on fait sécher la barbotine jusqu'à une humidité résiduelle < 1 % en poids.

8. Procédé selon l'une ou plusieurs des revendications 1 à 7, caractérisé en ce que l'on comprime le corps cru à une densité ≥ 80 % de la densité théorique.

9. Procédé selon l'une ou plusieurs des revendications 1 à 8, caractérisé en ce que l'on fragmente et tamise le corps cru à la taille de grain désirée, avant le frittage.

10. Procédé selon l'une ou plusieurs des revendications 1 à 9, caractérisé en ce que l'on règle une durée de palier lors du frittage ≤ 60 minutes, de préférence ≤ 15 minutes.
